# FASCICULE DE BREVET EUROPEEN

(11) **EP 3 676 894 B1**
(45) Date de publication et mention de la délivrance du brevet: **23.02.2022**
(21) Numéro de dépôt: 18758887.6
(22) Date de dépôt: 29.08.2018
(51) Int. Cl.: H01M 4/02, H01M 4/13, H01M 4/24, H01M 4/72, H01M 4/74, H01M 4/80, H01M 10/30, H01M 12/08

(54) **ÉLECTRODE À RÉSEAU MULTIPLE DE COLLECTE DE COURANT**
ELEKTRODE MIT MEHRFACHANORDNUNG ZUR STROMABNAHME
ELECTRODE WITH CURRENT COLLECTION MULTIPLE ARRAY

(30) Priorité: 30.08.2017 FR 1758012
(43) Date de publication de la demande: 08.07.2020
(73) Titulaire: Centre National de la Recherche Scientifique, 75016 Paris (FR); Institut Polytechnique de Grenoble, 38000 Grenoble (FR)
(72) Inventeur: CALDEIRA, Vincent, 38000 Grenoble (FR); DUBAU, Laetitia, 38000 Grenoble (FR); CHATENET, Marian, 38240 Meylan (FR)
(74) Mandataire: Jacobacci Coralis Harle
(86) Numéro de dépôt international: PCT/EP2018/073269
(87) Numéro de publication internationale: WO 2019/043076

(56) Documents cités:
- EP-A2- 1 156 544
- US-A1- 2002 062 138
- US-A1- 2013 260 265

## Description

L'invention concerne une électrode pour un dispositif rechargeable de stockage de l'énergie, comprenant plusieurs couches de matériau d'électrode et plusieurs couches poreuses de collecteur de courant, lesdites couches de matériau d'électrode et de collecteur de courant étant disposées de façon spécifique, un dispositif rechargeable de stockage de l'énergie comprenant ladite électrode, ainsi que les utilisations de ladite électrode.

L'invention s'applique typiquement mais non exclusivement aux dispositifs électrochimiques de stockage de l'énergie rechargeables dans lesquels une augmentation de la densité d'énergie est souhaitée, sans toutefois diminuer la puissance.

Les accumulateurs électrochimiques sont devenus des constituants indispensables dans des applications stationnaires et portables, telles que les dispositifs électroniques portables, les appareils électriques ou mécaniques. Ils sont également largement étudiés pour une utilisation dans les véhicules électriques ainsi que dans le domaine du stockage d'énergie. Les technologies et variantes sont nombreuses (Plomb-Acide, Nickel-Cadmium, Nickel-Métal-Hydrures, Lithium, Sodium-Soufre, Zinc-Air, Zinc-nickel, etc...).

Jusqu'à la fin des années 80, les deux principales technologies répandues sur le marché étaient les accumulateurs au plomb (dans les systèmes de démarrage de véhicules, l'alimentation de secours de centraux téléphoniques, les applications industrielles ou grand public où la masse et l'encombrement ne sont pas des critères clefs ...) et les accumulateurs nickel-cadmium (outillage portable, jouets, éclairage de secours...). Les inconvénients relevés sur la technologie au plomb (poids, fragilité, utilisation d'un liquide corrosif) et sur la technologie nickel-cadmium (toxicité du cadmium) ont conduit au développement d'autres accumulateurs alcalins de plus grande capacité (plus grande quantité d'électricité restituée à la décharge), plus respectueux de l'environnement, plus économiques et comprenant des matières premières abondantes tels que ceux comprenant une électrode négative de zinc (e.g. batteries zinc-air, batteries zinc-nickel).

Toutefois de tels systèmes ne peuvent encore concurrencer les systèmes Li-ion principalement à cause de leur faible durée de vie en cyclage ou faible cyclabilité (c'est-à-dire que le nombre de fois où l'accumulateur peut restituer le même niveau d'énergie après chaque nouvelle recharge est faible). En particulier, ces systèmes souffrent d'une perte de capacité non négligeable causée principalement par le changement de morphologie de l'électrode de zinc, voire de courts-circuits causés par la formation de dépôts dendritiques ou pulvérulents. En particulier, les dépôts de type dendritique conduisent rapidement à des poussées de zinc perforant les séparateurs et à la mise en court-circuit due au contact entre les deux électrodes de polarité opposée. Quant aux dépôts de type pulvérulent, ils ne sont pas, le plus souvent, de nature à permettre la reconstitution d'électrodes aptes à un fonctionnement satisfaisant, puisque l'adhérence de la matière active sur le support est insuffisante. Par ailleurs, la réduction des oxydes, hydroxydes et zincates en zinc au niveau de l'anode lors des recharges, se caractérise par des changements de morphologie de ladite électrode. On observe en effet, selon les modes de fonctionnement des accumulateurs, différents types de modifications de morphologie de l'anode, de par un phénomène de redistribution non uniforme du zinc lors de sa formation. Plusieurs solutions ont été proposées afin de remédier à la poussée dendritique et/ou à la redistribution non uniforme du zinc telles que l'ajout d'additifs, qu'ils soient incorporés à l'électrolyte ou à la matière active anodique, destinés notamment à limiter la solubilité des zincates ; l'emploi de procédés mécaniques visant à réduire la formation de dendrites et à éviter les dépôts pulvérulents (circulation de l'électrolyte et/ou de l'électrode de zinc sous forme dispersée) ; le contrôle des paramètres de charge (intensité, tension,....) et l'emploi de courants puisés ; ou l'utilisation de séparateurs résistants à la formation des dendrites, notamment de types microporeux ou de membranes échangeuses.

En particulier, la demande de brevet EP0028879 a décrit une batterie nickel-zinc dans laquelle l'électrode de zinc comprend un collecteur de courant sous la forme d'une grille conductrice et un matériau d'électrode déposé sur le collecteur de courant comprenant une matière active à base de zinc, des fibres de cellulose naturelle et des additifs capables de limiter la solubilité des zincates.

Ces diverses techniques se sont toutefois avérées insuffisantes pour améliorer la densité d'énergie.

En parallèle, la demande de brevet US5993999 a décrit une batterie comprenant une électrode comprenant successivement une couche de collecteur de courant, une couche de matériau d'anode, éventuellement une couche choisie parmi une couche absorbante (polypropylène poreux) et une couche de collecteur de courant, une couche de matériau d'anode et une couche de collecteur de courant. Toutefois, la structure de cette électrode peut conduire à la formation de dendrites, ou autres dépôts de zinc, sur les surfaces de collecteur de courant externes en contact direct avec l'électrolyte, dépôts connus pour avoir un effet négatif sur les performances électrochimiques.

La demande de brevet US 2013/260265 A1 décrit une électrode positive à air pour un dispositif de stockage de l'énergie rechargeable, comprenant deux couches externes et plusieurs couches internes interposées entre les deux couches externes, lesdites couches internes et externes comprenant plusieurs couches de matériau d'électrode ME et plusieurs couches poreuses de collecteur de courant CC, lesdites couches de matériau d'électrode ME et de collecteur de courant CC étant alternées selon le motif de répétition -[CC-ME]- et au moins l'une des deux couches externes de l'électrode est une couche de matériau d'électrode ME.

Ainsi, le but de la présente invention est de pallier les inconvénients de l'art antérieur, et notamment de fournir une électrode pour un dispositif de stockage de l'énergie rechargeable permettant d'augmenter la densité d'énergie et/ou d'obtenir une bonne durée de vie en cyclage sans toutefois diminuer la puissance dudit dispositif.

L'invention a donc pour objet une électrode pour un dispositif de stockage de l'énergie rechargeable caractérisée en ce qu'elle comprend deux couches externes et plusieurs couches internes interposées entre les deux couches externes, lesdites couches internes et externes comprenant plusieurs couches de matériau d'électrode ME et plusieurs couches poreuses de collecteur de courant CC, lesdites couches de matériau d'électrode ME et de collecteur de courant CC étant alternées selon le motif de répétition -[CC-ME]-(ou -[ME-CC]-) et au moins l'une des deux couches externes de l'électrode est une couche de matériau d'électrode ME, caractérisée en ce que ladite électrode est une électrode négative.

Lorsque l'une des couches externes est une couche poreuse de collecteur de courant CC, cette dernière, par la configuration/assemblage de la batterie, n'est pas en contact direct avec l'électrolyte.

Par conséquent, grâce à l'utilisation de plusieurs couches poreuses de collecteur de courant réparties dans l'électrode et d'au moins une des deux couches externes de l'électrode étant une couche de matériau d'électrode ME, un réseau multiple de collecte de courant est créé et permet d'améliorer la densité d'énergie de ladite électrode tout en évitant les courts-circuits par formation de dendrites à la recharge. En particulier, les champs de courant internes sont améliorés permettant ainsi une meilleure répartition du courant au sein de l'électrode et une redistribution du zinc plus homogène. Par ailleurs, la réversibilité de l'électrode est améliorée.

En outre, les inventeurs de la présente demande ont découvert de façon surprenante que la structure d'électrode telle que définie ci-dessus est particulièrement adaptée lorsque la conductivité de la matière active dans le matériau d'électrode est faible (i.e. < 10⁻¹ S cm⁻¹) et/ou que l'épaisseur de l'électrode au sein du dispositif n'est pas un facteur limitant (e.g. applications stationnaires). Elle est également adaptée pour des dispositifs dans lesquels le transport de matière et de charges dans l'électrolyte n'est pas limitant (e.g. supercondensateurs).

Notamment, l'électrode est destinée à être agencée dans un dispositif rechargeable de stockage de l'énergie comprenant l'électrode, une contre-électrode et un électrolyte, la couche externe de matériau d'électrode ME étant destinée à faire face à une couche externe de la contre-électrode et destinée à être en contact direct avec l'électrolyte.

Selon une forme de réalisation de l'invention, l'électrode peut avoir une épaisseur variant de 50 µm à 4 mm environ, et de préférence de 500 µm à 2 mm environ.

Au moins une partie ou chacune des couches poreuses de collecteur de courant CC peut être sous la forme d'une grille, d'une feuille perforée, d'un feutre, d'un maillage, d'un tissu, d'une mousse, de préférence d'une mousse à porosité ouverte.

Chacune des couches poreuses de collecteur de courant CC de l'électrode est de préférence sous la forme d'une grille. Cela permet ainsi d'obtenir un volume actif d'électrode optimal tout en garantissant un poids minimum.

Les couches poreuses de collecteur de courant CC sont de préférence choisies parmi les matériaux dont la conductivité électronique est bonne (i.e. >10² S cm⁻¹). Ainsi, selon une forme de réalisation préférée, les couches poreuses de collecteur de courant CC, identiques ou différentes, sont des couches de matériau conducteur.

Les couches poreuses de collecteur de courant CC peuvent être choisies parmi des couches poreuses non métalliques (type feutre carbone conducteur) ou parmi des couches poreuses métalliques.

Les couches poreuses de collecteur de courant CC, identiques ou différentes, lorsqu'elles sont des couches métalliques, sont notamment des couches de matériau conducteur métalliques tel qu'un tissu de carbone comprenant en outre un métal M choisi parmi l'aluminium, le cuivre, le nickel, et l'un de leurs mélanges.

À titre d'exemple de couches poreuses de collecteur de courant CC différentes, l'électrode peut comprendre des couches poreuses de collecteur de courant CC¹ comprenant (ou étant constituées d') un métal M¹ et des couches poreuses de collecteur de courant CC^{1'} comprenant (ou étant constituées d') un métal M^{1'}, M¹ et M^{1'} étant différents et ayant la même définition que M.

Les épaisseurs des couches poreuses de collecteur de courant CC peuvent être identiques ou différentes.

L'ensemble de la surface des couches poreuses de collecteur de courant CC peut être recouverte d'une couche protectrice métallique.

En particulier, les couches protectrices métalliques, identiques ou différentes comprennent (ou sont constituées d') un métal M' choisi parmi le plomb, l'argent, l'étain, et l'un de leurs mélanges.

Les couches protectrices métalliques permettent de protéger les couches poreuses de collecteur de courant CC d'une éventuelle corrosion, notamment lorsque l'électrolyte du dispositif est un électrolyte aqueux basique.

Selon l'invention, on entend par « couche externe », une couche qui ne constitue pas une couche interne de l'électrode, en particulier qui ne constitue pas soit une couche de matériau d'électrode ME interposée entre deux couches poreuses de collecteur de courant CC soit une couche poreuse de collecteur de courant CC interposée entre deux couches de matériau d'électrode ME.

La/Les couche/s externe/s de l'électrode qui est/sont une/des couche/s de matériau d'électrode ME est/sont de préférence destinée/s à être en contact avec l'électrolyte du dispositif.

Est considéré comme électrolyte, toute substance liquide ou solide permettant le passage du courant électrique par un déplacement ionique.

La/les couche/s poreuse/s de collecteur de courant CC est/sont destinée/s à assurer la connexion électrique de l'électrode avec le circuit extérieur.

Selon une première variante de l'invention, l'électrode comprend une couche externe qui est une couche de matériau d'électrode ME et une couche externe qui est une couche poreuse de collecteur de courant CC.

Selon cette première variante, la couche externe de l'électrode constituée d'une couche poreuse de collecteur de courant CC ne sera pas en contact direct avec l'électrolyte et la couche de matériau d'électrode ME externe sera en contact avec l'électrolyte après assemblage du dispositif.

Selon cette première variante, l'électrode peut être sous la forme d'un assemblage de couches successives ayant la structure suivante :
[CC-ME]ₙ dans laquelle ME est une couche de matériau d'électrode, CC est une couche poreuse de collecteur de courant, 2≤n≤8, et de préférence 2≤n≤4.

Par conséquent, l'électrode comprend une couche externe poreuse de collecteur de courant CC, une couche externe de matériau d'électrode ME et 2n-2 couches internes interposées entre lesdites couches externes, lesdites couches internes et externes comprenant n couches de matériau d'électrode ME et n couches poreuses de collecteur de courant CC, lesdites couches de matériau d'électrode ME et de collecteur de courant CC étant alternées selon le motif de répétition -[CC-ME]- (ou -[ME-CC]-).

Lorsque les couches poreuses de collecteur de courant comprennent (ou sont constituées de) des métaux M¹ et M^{1'} différents, l'électrode peut être sous la forme d'un assemblage de couches successives ayant la structure suivante :
^{∗} [CC¹-ME-CC^{1'}-ME]ₙ₁, avec 1 ≤ n₁ ≤ 4, et de préférence 1 ≤ n₁ ≤ 2, ME étant une couche de matériau d'électrode, CC¹ étant une couche poreuse de collecteur de courant comprenant (ou étant constituée d') un métal M¹, et CC^{1'} étant une couche interne de collecteur de courant comprenant (ou étant constituée d') un métal M^{1'} ; ou
^{∗} {[CC¹-ME]ₙ₂-[CC^{1'}-ME]ₙ₃}ᵤ, avec 1 ≤ n₂ ≤ 7, 1 ≤ n₃ ≤ 7, 1 ≤ u ≤ 2, ME étant une couche de matériau d'électrode, CC¹ étant une couche poreuse de collecteur de courant comprenant (ou étant constituée d') un métal M¹, et CC^{1'} étant une couche poreuse de collecteur de courant comprenant (ou étant constituée d') un métal M^{1'}; ou
^{∗} {[CC¹-ME]ₙ₄-[CC^{1'}-ME]ₙ₅-[CC¹-ME]ₙ₆}ᵥ, avec 1 ≤ n₄ ≤ 6, 1 ≤ n₅ ≤ 6, 1 ≤ n₆ ≤ 6, 1 ≤ v ≤ 2, ME étant une couche de matériau d'électrode, CC¹ étant une couche poreuse de collecteur de courant comprenant (ou étant constituée d') un métal M¹, et CC^{1'} étant une couche poreuse de collecteur de courant comprenant (ou étant constituée d') un métal M^{1'}.

M¹ est de préférence plus conducteur que M^{1'}. À titre d'exemple, M¹ est du cuivre et M^{1'} est du nickel.

Lorsque les couches poreuses de collecteur de courant comprennent (ou sont constituées de) des métaux M¹ et M^{1'} différents, l'électrode peut être sous la forme d'un assemblage de couches successives dans lesquelles les couches poreuses de collecteur de courant CC¹ et les couches poreuses de collecteur de courant CC^{1'} sont disposées de façon aléatoire au sein de l'électrode (étant entendu que les couches de matériau d'électrode ME et de collecteur de courant (CC^{1'} ou CC¹) sont alternées selon le motif de répétition -[CC-ME]- (ou -[ME-CC]-) avec CC = CC^{1'} ou CC¹).

Selon une deuxième variante de l'invention, l'autre couche externe de l'électrode est une couche de matériau d'électrode ME. Ainsi, l'électrode comprend deux couches externes qui sont des couches de matériau d'électrode ME.

Selon cette deuxième variante, l'électrode ne comprend pas de couche(s) externe(s) poreuse(s) de collecteur de courant. En d'autres termes, toutes les couches poreuses de collecteur de courant de l'électrode sont des couches internes.

Selon cette deuxième variante, l'électrode peut être sous la forme d'un assemblage de couches successives ayant la structure suivante :
ME-[CC-ME]ₚ₋₁ dans laquelle ME est une couche de matériau d'électrode, CC est une couche poreuse de collecteur de courant, 2≤p≤8, et de préférence 2≤p≤3.

Dans ce cas, l'autre couche externe de l'électrode constituée d'une couche de matériau d'électrode ME ne sera pas en contact direct avec l'électrolyte après assemblage du dispositif.

Par conséquent, l'électrode comprend deux couches externes de matériau d'électrode ME et 2p-3 couches internes interposées entre lesdites couches externes, lesdites couches internes et externes comprenant p couches de matériau d'électrode ME et p-1 couches poreuses de collecteur de courant CC, lesdites couches de matériau d'électrode ME et de collecteur de courant CC étant alternées selon le motif de répétition -[CC-ME]- (ou -[ME-CC]-).

Lorsque les couches poreuses de collecteur de courant comprennent (ou sont constituées de) des métaux M¹ et M^{1'} différents, l'électrode peut être sous la forme d'un assemblage de couches successives ayant la structure suivante :
^{∗} ME-[CC¹-ME-CC^{1'}-ME]ₚ₁, avec 1 ≤ p₁ ≤ 4, et de préférence 1 ≤ p₁ ≤ 2, ME étant une couche de matériau d'électrode, CC¹ étant une couche poreuse de collecteur de courant comprenant (ou étant constituée d') un métal M¹, et CC^{1'} étant une couche poreuse de collecteur de courant comprenant (ou étant constituée d') d'un métal M¹' ; ou
^{∗} ME-{[CC¹-ME]ₚ₂-[CC^{1'}-ME]ₚ₃}_{q}, avec 1 ≤ p₂ ≤ 7, 1 ≤ p₃ ≤ 7, 1 ≤ q ≤ 4, ME étant une couche de matériau d'électrode, CC¹ étant une couche poreuse de collecteur de courant comprenant (ou étant constituée d') un métal M¹, et CC^{1'} étant une couche poreuse de collecteur de courant comprenant (ou étant constituée d') un métal M^{1'} ; ou
^{∗} ME-{[CC¹-ME]ₚ₄-[CC^{1'}-ME]ₚ₅-[CC¹-ME]ₚ₆}ᵣ, avec 1 ≤ p₄ ≤ 6, 1 ≤ p₅ ≤ 6,1 ≤ p₆ ≤ 6, 1 ≤ r ≤ 3, ME étant une couche de matériau d'électrode, CC¹ étant une couche poreuse de collecteur de courant comprenant (ou étant constituée d') un métal M¹, et CC^{1'} étant une couche poreuse de collecteur de courant comprenant (ou étant constituée d') un métal M^{1'}.

M¹ est de préférence plus conducteur que M^{1'}. À titre d'exemple, M¹ est du cuivre et M^{1'} est du nickel.

Lorsque les couches poreuses de collecteur de courant comprennent (ou sont constituées de) des métaux M¹ et M^{1'} différents, l'électrode peut être sous la forme d'un assemblage de couches successives dans lesquelles les couches poreuses de collecteur de courant CC¹ et les couches poreuses de collecteur de courant CC^{1'} sont disposées de façon aléatoire au sein de l'électrode (étant entendu que les couches de matériau d'électrode ME et de collecteur de courant (CC^{1'} ou CC¹) sont alternées selon le motif de répétition -[CC-ME]- (ou -[ME-CC]-) avec CC = CC^{1'} ou CC¹).

L'électrode est une électrode négative.

Chacune des couches de matériau d'électrode ME comprend au moins une matière active d'électrode, éventuellement un liant polymère et éventuellement un agent conférant une conductivité électronique.

La matière active est une matière active d'électrode négative.

Les couches de matériau d'électrode ME comprennent de préférence la même matière active d'électrode, notamment elles sont de compositions identiques.

Selon une forme de réalisation particulière et préférée de l'invention, l'électrode est une électrode négative à base de zinc. Selon ce mode de réalisation, la matière active des couches de matériau d'électrode ME est de préférence choisie parmi du zincate de calcium ou d'un mélange d'oxyde de zinc et d'hydroxyde de calcium ou d'un mélange de zinc et d'hydroxyde de calcium.

Selon une forme de réalisation de l'invention, chacune des couches de matériau d'électrode ME a une épaisseur variant de 20 µm à 2 mm environ, et de préférence de 50 µm à 500 µm environ.

Les épaisseurs des couches de matériau d'électrode ME peuvent être identiques ou différentes, et de préférence identiques.

L'électrode conforme à la présente invention peut être facilement fabriquée par tout type de procédé permettant d'appliquer une couche de matériau d'électrode sous la forme d'une encre ou d'une pâte comprenant au moins une matière active d'électrode négative, au moins un solvant, éventuellement au moins un liant polymère et éventuellement un agent conférant une conduction électronique, sur une couche poreuse de collecteur de courant CC. Parmi de telles méthodes, on peut notamment mentionner l'enduction, le trempage, la pulvérisation (« *spray* »), l'impression, etc ...

L'électrode comprend notamment plusieurs couches de matériau d'électrode ME et plusieurs couches de collecteurs de courant CC internes et poreuses. En particulier, la couche externe destinée à être en contact avec l'électrolyte est une couche de matériau d'électrode ME. Selon un exemple, aucune des couches de collecteur de courant n'est en contact avec l'électrolyte.

L'électrode est destinée à être agencé dans un dispositif rechargeable de stockage de l'énergie comprenant l'électrode, une contre-électrode notamment de charge inverse par rapport à l'électrode et l'électrolyte. La couche externe de l'électrode qui est une couche de matériau d'électrode ME est destinée à faire face à une couche externe de la contre-électrode. En particulier, la couche externe en matériau d'électrode ME de l'électrode est destinée à être en contact direct avec l'électrolyte.

L'invention a pour deuxième objet un dispositif rechargeable de stockage de l'énergie comprenant :
- au moins une électrode positive,
- au moins une électrode négative,
- un électrolyte,
ledit dispositif étant caractérisé en ce que ladite électrode est une électrode négative est une électrode conforme au premier objet de l'invention, et en ce que ledit électrolyte n'est pas en contact direct avec les couches poreuses de collecteur de courant CC de ladite électrode négative.

Selon une forme de réalisation préférée de l'invention, l'électrolyte est en contact direct avec l'électrode telle que définie dans le premier objet de l'invention par l'intermédiaire de la couche externe qui est une couche de matériau d'électrode ME de ladite électrode.

En particulier, l'électrolyte du dispositif n'est pas en contact direct avec les couches poreuses de collecteur de courant CC de l'électrode conforme au premier objet de l'invention. Cela permet ainsi d'éviter, ou pour le moins de réduire, la formation de dendrites, et d'éviter un court-circuit au sein du dispositif. En effet, les couches poreuses de collecteur de courant étant très conductrices, leur contact direct avec l'électrolyte peut entraîner, dès la première charge, une insaturation de l'électrolyte et une augmentation de l'épaisseur de l'électrode, induisant la formation de dendrites, la perforation du séparateur et éventuellement un court-circuit après 1 ou 2 cycles.

Le dispositif peut comprendre en outre au moins un élément en carbone vitreux en contact direct avec l'autre des deux couches externes de l'électrode, et notamment avec la couche externe destinée à assurer la connexion électrique de l'électrode avec le circuit extérieur. Par conséquent, la connexion électrique de l'électrode avec le circuit extérieur se fait par l'intermédiaire dudit élément. Cela permet ainsi d'éviter un éventuel contact entre ladite autre des deux couches externes de l'électrode et l'électrolyte au sein du dispositif, notamment lorsque ladite autre des deux couches externes de l'électrode est une couche poreuse de collecteur de courant CC.

Le dispositif peut notamment être choisi parmi un accumulateur alcalin, une batterie lithium-ion, une batterie au plomb, une batterie nickel-hydrure métallique ou Ni-MH (de l'anglais « *nickel-metal hydride* ») et un supercondensateur.

De façon classique, et en fonction du type de dispositif, l'électrolyte peut être liquide, gélifié ou solide.

Selon une forme de réalisation préférée de l'invention, le dispositif est un accumulateur alcalin choisi parmi une batterie zinc/air et une batterie zinc/nickel, et de préférence une batterie zinc/nickel.

L'accumulateur alcalin est défini comme étant un dispositif rechargeable de stockage de l'énergie comprenant :
- au moins une électrode positive,
- au moins une électrode négative,
- un électrolyte liquide,
- un ou plusieurs séparateurs poreux.

Lorsque l'accumulateur alcalin est une batterie zinc/nickel, l'électrode négative du dispositif est une électrode à base de zinc telle que définie dans le premier objet de l'invention.

Dans ce mode de réalisation, l'électrode positive peut être une électrode à base de nickel, notamment comprenant à titre de matière active de l'oxyde de nickel (III) (NiOOH), de l'hydroxyde de nickel (II) (Ni(OH)₂, ou un de leurs mélanges.

Le séparateur poreux peut être un matériau poreux non conducteur électronique, généralement un matériau polymère à base de polyoléfine (e.g. polyéthylène) ou en fibres (e.g. fibres de verre ou fibres de bois, fibres cellulosiques).

L'électrode conforme au premier objet de l'invention peut comprendre des bords (supérieurs, inférieurs ou circulaires) destinés à assurer la connexion électrique avec le circuit extérieur. Ces bords peuvent alors être recouverts d'un matériau isolant, tel que le polytétrafluoroéthylène (PTFE). Cela permet ainsi d'isoler, au sein du dispositif, les parties de l'électrode qui ne sont pas destinées à être en contact avec l'électrolyte.

Le dispositif conforme à l'invention peut facilement être assemblé par toute technique connue de l'homme du métier.

L'invention a pour troisième objet l'utilisation d'une électrode conforme au premier objet de l'invention pour améliorer la densité d'énergie d'un dispositif rechargeable de stockage de l'énergie.

L'invention a pour quatrième objet l'utilisation d'une électrode conforme au premier objet de l'invention dans un accumulateur alcalin.

L'accumulateur alcalin est tel que défini dans le deuxième objet de l'invention comme étant un dispositif rechargeable de stockage de l'énergie caractérisé en ce que l'électrode négative est une électrode conforme au premier objet de l'invention.

La présente invention est illustrée par les exemples ci-après, auxquels elle n'est cependant pas limitée.

### EXEMPLES

Les matières premières utilisées dans les exemples, sont listées ci-après :
- Alcool polyvinylique, Fluka, masse molaire M_{w} = 72 000,
- nitrure de titane, EASYL, pureté de 99%,
- oxyde de bismuth, Alfa Aesar, pureté de 99%,
- Electrode positive à l'oxyde de nickel récupérée du démontage d'une pile Ni-Zn de marque PKcell),
- hydroxyde de nickel (II) (Ni(OH)₂), de qualité batterie,
- hydroxyde de potassium (KOH), Alfa Aesar, pureté de 85%,
- hydroxyde de lithium (LiOH), Normapur, pureté de 96%,
- oxyde de zinc (ZnO), a.m.p.e.r.e. industrie, pureté de 99.9%,
- zincate de calcium, EASYL, pureté 99%,
- polytétrafluoroéthylène (PTFE), ROTH, Seal Tape Grade L,
- séparateur non tissé constitué d'une polyoléfine, Viledon, Freudenberg, FS 2203-10
- membrane de polypropylène, Celgard^{®}3401,
- couche poreuse de collecteur de courant sous la forme d'une mousse circulaire de cuivre, GoodFellow, CU003804, (épaisseur réduite à 800µm),
- couche poreuse de collecteur de courant sous la forme d'une grille circulaire de cuivre, Alfa Aesar, diamètre des fils de cuivre de 56 µm, ref 46603,
- couche poreuse de collecteur de courant constitué d'une mousse de nickel récupérée du démontage d'une pile Ni-Zn de marque PKcell.

Sauf mention contraire, tous les matériaux ont été utilisés tels que reçus des fabricants.

### Exemple 1 : préparation d'une électrode E-A non conforme à l'invention et de deux électrodes E-1 et E-2 conformes à l'invention

Une encre de matériau d'électrode comprenant 900 mg de zincate de calcium à titre de matière active, 42 mg d'oxyde de bismuth et 144 mg de nitrure de titane à titre d'additifs conducteurs, 66 mg d'alcool polyvinylique à titre de liant polymère et 1,90 ml d'eau a été préparée.

Le zincate de calcium a été synthétisé par une méthode hydro-micromécanique telle que décrite dans la demande internationale WO 2016/156749 A1. La distribution de taille des particules de zincate de calcium mesurée par granulométrie LASER (voie liquide) était telle que d₅₀ = 10 ± 2 µm.

Cette encre a ensuite été appliquée sur l'une des faces principales d'une couche poreuse de collecteur de courant d'épaisseur 800 µm et constituée d'une mousse circulaire de cuivre pour former une électrode circulaire **E-A.** L'électrode circulaire obtenue **E-A** a alors été séchée à 50°C environ dans un four, puis a été placée dans un anneau de PTFE et pressée jusqu'à atteindre une épaisseur d'environ 0,5 mm. L'anneau de PTFE protégeait les bords circulaires de l'électrode laissant toujours une surface centrale de contact électrolyte - électrode.

L'électrode circulaire **E-A** comprenait une couche de collecteur de courant CC et une couche de matériau d'électrode ME déposée sur la couche de collecteur de courant CC. Elle était donc sous la forme d'un assemblage de couches successives ayant la structure suivante :
[CC-ME]

Une encre de matériau d'électrode comprenant 450 mg de zincate de calcium à titre de matière active, 21 mg d'oxyde de bismuth et 72 mg de nitrure de titane à titre d'additifs conducteurs, 33 mg d'alcool polyvinylique à titre de liant polymère et 1,90 ml d'eau a été préparée.

Un premier dépôt utilisant l'encre telle que préparée ci-dessus a ensuite été appliqué sur une première couche poreuse de collecteur de courant CC d'épaisseur 100 µm et constituée d'une grille circulaire de cuivre.

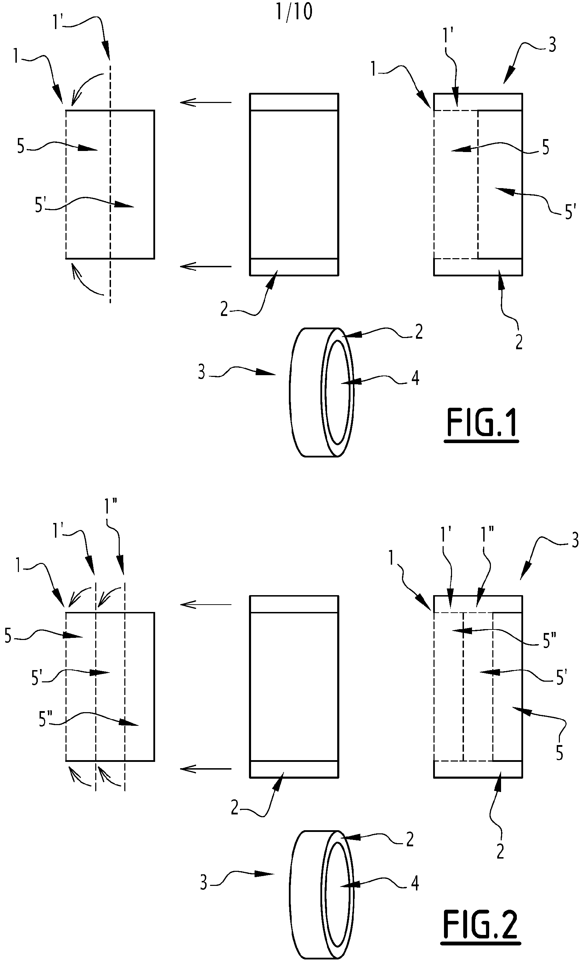

Un deuxième dépôt utilisant l'encre telle que préparée ci-dessus a été appliquée sur une deuxième couche poreuse de collecteur de courant CC d'épaisseur 100 µm et constituée d'une grille circulaire de cuivre de diamètre supérieur au dépôt. Les deux couches poreuses de collecteur de courant CC, chacune étant recouverte d'une encre de matériau d'électrode ont ensuite été séchées à 50°C environ dans un four puis assemblées de manière à mettre en contact la première couche de matériau d'électrode ME avec la deuxième couche de collecteur de courant CC, pour former une électrode circulaire **E-1.** Suivant la FIG.1., on note que le collecteur de courant CC **1'** de diamètre supérieur au dépôt et utilisé dans le deuxième dépôt est rabattu sur le premier collecteur de courant CC **1,** utilisé pour le premier dépôt, de sorte que ces deux derniers soient en contact. L'électrode circulaire **3** obtenue **E-1** a alors été placée dans un anneau de PTFE **2** et pressée jusqu'à atteindre l'épaisseur de 0,5 mm environ. L'anneau de PTFE **2** protégeait les bords circulaires de l'électrode laissant toujours une surface centrale de contact électrolyte - électrode **4.**

L'électrode circulaire **E-1** comprenait successivement une première couche poreuse de collecteur de courant CC 1, une première couche de matériau d'électrode ME **5,** une deuxième couche poreuse de collecteur de courant CC **1'** reliée à la première couche poreuse de collecteur de courant CC **1** et une deuxième couche de matériau d'électrode ME **5'.** La deuxième couche de matériau d'électrode ME **5'** étant destinée à être en contact avec l'électrolyte et la première couche poreuse de collecteur de courant **1** étant destinée à assurer la connexion électrique de l'électrode **3** avec le circuit extérieur (non représenté). L'électrode 3 était donc sous la forme d'un assemblage de couches successives ayant la structure suivante :
[CC-ME]₂

Une encre de matériau d'électrode comprenant 300 mg de zincate de calcium à titre de matière active, 14 mg d'oxyde de bismuth et 48 mg de nitrure de titane à titre d'additifs conducteurs, 22 mg d'alcool polyvinylique à titre de liant polymère et 1,90 ml d'eau a été préparée.

Le zincate de calcium a été synthétisé par une méthode telle que décrite ci-dessus.

Un premier dépôt utilisant l'encre telle que préparée ci-dessus a ensuite été appliquée sur une première couche poreuse de collecteur de courant CC d'épaisseur 100 µm et constituée d'une grille circulaire de cuivre.

Un deuxième dépôt utilisant l'encre telle que préparée ci-dessus a été appliquée sur une deuxième couche poreuse de collecteur de courant CC d'épaisseur 100 µm et constituée d'une grille circulaire de cuivre de diamètre supérieur au dépôt.

Un deuxième dépôt utilisant l'encre telle que préparée ci-dessus a été appliquée sur une troisième couche poreuse de collecteur de courant CC d'épaisseur 100 µm et constituée d'une grille circulaire de cuivre de diamètre supérieur au dépôt. Les trois couches poreuses de collecteur de courant CC, chacune étant recouverte d'une encre de matériau d'électrode, ont ensuite été séchées à 50°C environ dans un four puis assemblées de manière à mettre en contact la première couche de matériau d'électrode ME avec la deuxième couche poreuse de collecteur de courant CC et la deuxième couche de matériau d'électrode ME avec la troisième couche poreuse de collecteur de courant CC, pour former une électrode **E-2.** Suivant la FIG.2., on note que les collecteurs de courant CC de diamètre supérieur au dépôt **1', 1"** sont rabattus sur le premier collecteur de courant CC **1,** utilisé pour le premier dépôt, de sorte que ces trois derniers soient en contact. L'électrode **3** obtenue **E-2** a alors été placée dans un anneau de PTFE **2** et pressée jusqu'à atteindre l'épaisseur de 0,5 mm environ. L'anneau de PTFE **2** protégeait les bords circulaires de l'électrode laissant toujours une surface centrale **4** de contact électrolyte - électrode.

L'électrode circulaire **E-2 3** comprenait successivement une première couche poreuse de collecteur de courant CC **1,** une première couche de matériau d'électrode ME **5,** une deuxième couche poreuse de collecteur de courant CC **1',** une deuxième couche de matériau d'électrode ME **5',** une troisième couche poreuse de collecteur de courant CC **1"** et une troisième couche de matériau d'électrode ME **5",** la troisième couche de matériau d'électrode ME **5"** étant destinée à être en contact avec l'électrolyte et la première couche poreuse de collecteur de courant **1** étant destinée à assurer la connexion électrique de l'électrode **3** avec le circuit extérieur (non représenté). L'électrode **3** était donc sous la forme d'un assemblage de couches successives ayant la structure suivante :
[CC-ME]₃

Trois accumulateurs alcalins zinc/nickel ont ensuite été fabriqués en assemblant :
- l'une des électrodes négatives à base de zinc **E-A, E-1** ou **E-2,**
- une électrode positive à base de nickel récupérée d'une pile Ni-Zn commerciale de marque PKcell comprenant une couche d'un matériau d'électrode comprenant du NiOOH et du Ni(OH)₂, déposée sur une couche poreuse de collecteur de courant constituée d'une mousse de nickel,
- un séparateur non tissé constitué d'une polyoléfine et une membrane de polypropylène interposés entre les électrodes négative et positive, le séparateur faisant face à l'électrode négative, et la membrane faisant face à l'électrode positive, et
- un électrolyte comprenant d'une solution aqueuse comprenant du KOH 7M et 10g/l de LiOH, ladite solution aqueuse étant saturée en ZnO.

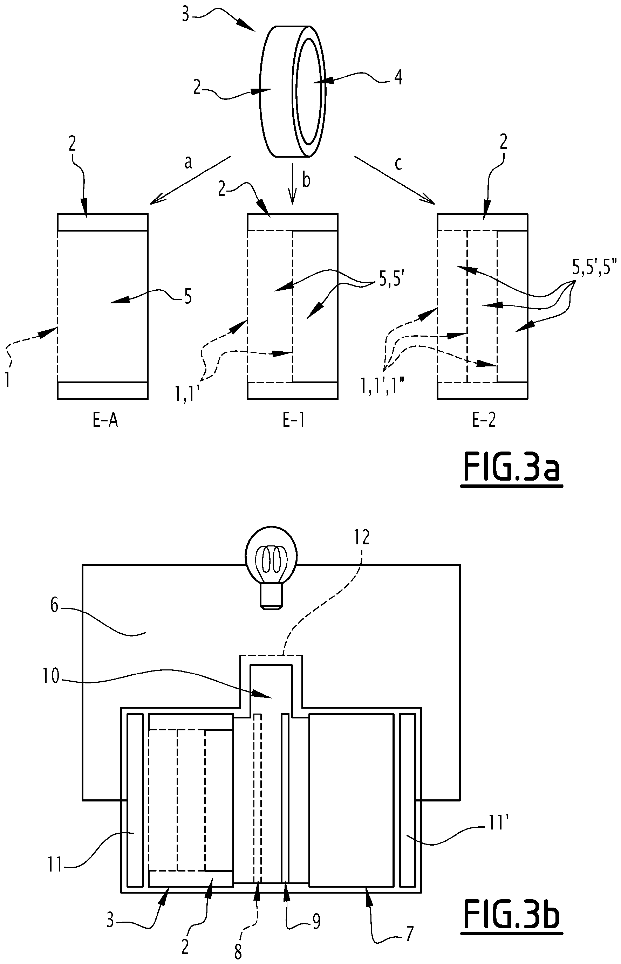

La FIG.3.a. montre les électrodes négatives à base de zinc **E-A** (FIG.3.a.), **E-1** (FIG.3.b.) et **E-2** (FIG.3.c.) telles que préparées ci-dessus.

La FIG.3.b. montre un accumulateur **6** tel que fabriqué ci-dessus comprenant une électrode négative à base de zinc **3,** une électrode positive à base de nickel **7,** un séparateur non tissé constitué d'une polyoléfine **8** et une membrane de polypropylène **9** interposés entre les électrodes négative **3** et positive **7,** le séparateur **8** faisant face à l'électrode négative **3,** et la membrane **9** faisant face à l'électrode positive **7,** et un électrolyte **10.**

L'accumulateur comprend également deux couches de carbone vitreux **11, 11'** à ses deux extrémités permettant le contact électrique direct avec les couches poreuses de collecte de courant externe ainsi qu'un système de sécurité perméable aux gaz mais pas à l'électrolyte liquide **12** afin d'éviter une surpression éventuelle en cas de dégagement gazeux.

L'assemblage de l'électrode **3** munie de son anneau de PTFE **2** à la collecte externe de courant permet d'éviter le contact direct entre la couche poreuse externe de collecteur de courant de l'électrode négative et l'électrolyte.

Des tests de charge et décharge galvanostatiques (à courant constant) à C/3 (soit 3 h de charge et 3 h de décharge avec un courant de 1,33 mA) avec une tension de coupure de 1,93 V en charge et une tension de fin de décharge de 1,40 V ont ensuite été effectués, soit avec une capacité pratique de 4 mAh qui correspond à 40% de la capacité théorique. Les tests ont été effectués à température ambiante avec un potentiostat-galvanostat vendu sous la dénomination commerciale OGF500 par la société Origalys. Préalablement au cyclage à C/3, 3 cycles de charge à C/10 et de décharge à C/5 ont été effectués.

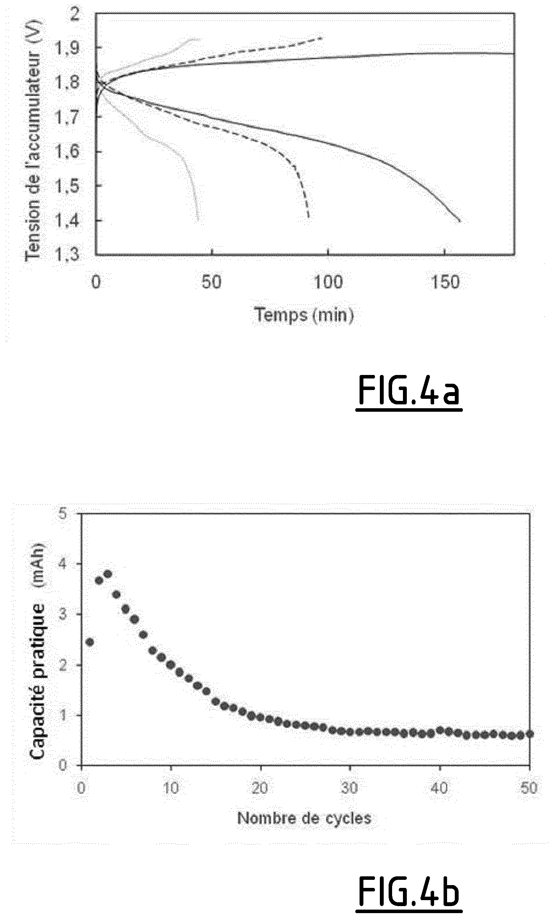

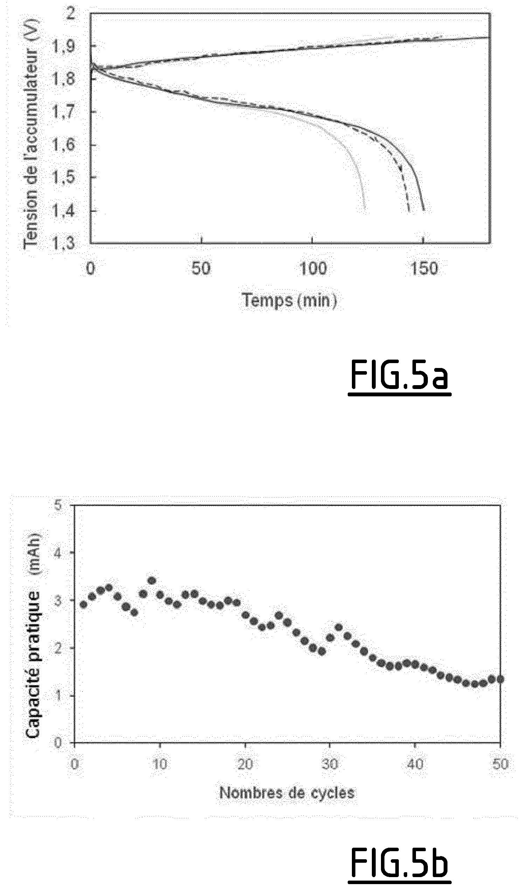

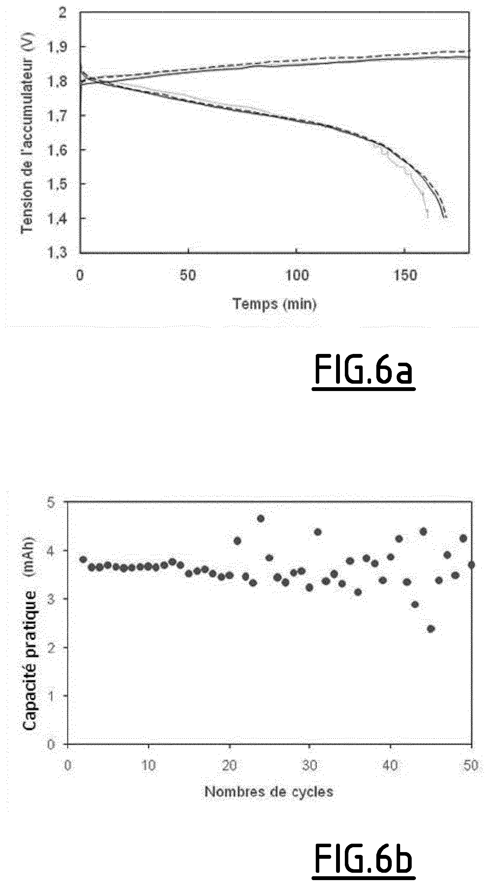

Les FIG.4.a., FIG.5.a. et FIG.6.a. montrent des courbes de la tension de l'accumulateur (en volts, V) en fonction du temps (en minutes, min) après 4 cycles (soit après les 3 cycles de formations + 1 cycle à C/3) (courbe avec les traits pleins), après 10 cycles (courbe avec les traits pointillés larges) et après 20 cycles (courbe avec les traits pointillés courts) lorsque l'accumulateur comprend l'électrode **E-A** (FIG.4.a.), l'électrode **E-1** (FIG.5.a.) ou l'électrode **E-2** (FIG.6.a.), à titre d'électrode négative.

Les FIG.4.b., FIG.5.b. et FIG.6.b. montrent l'évolution de la capacité pratique de l'accumulateur (en milliampère heure, mAh) en fonction du nombre de cycles lorsque l'accumulateur comprend l'électrode **E-A** (FIG.4.b.), l'électrode **E-1** (FIG.5.b.) ou l'électrode **E-2** (FIG.6.b.), à titre d'électrode négative.

On peut observer lorsqu'une électrode négative non conforme à l'invention **E-A** est utilisée, une surtension est observée au 10^{ème} cycle conduisant la batterie à atteindre la tension de coupure en dessous de 100 min de charge et au 20^{ème} cycle en dessous de 50 min de charge (FIG.4.a.). Cela se traduit également par une chute importante de la capacité pratique (FIG.4.b.) dès les premiers cycles. La capacité pratique moyenne de cette électrode **E-A** pour les premiers 50 cycles était de 1,27 mAh, ce qui représente seulement 32% de la capacité pratique initiale de 4 mAh.

Sur la FIG.5.a., les performances électrochimiques sont améliorées. Ainsi, avec une électrode négative conforme à l'invention **E-1** dans laquelle deux couches poreuses de collecteurs de courant sont utilisées, la surtension au 10^{ème} et au 20^{ème} cycles est moins prononcée. Une diminution très modérée de la capacité pratique est également observée (FIG.5.b.). La capacité pratique moyenne de cette électrode **E-1** pour les premiers 50 cycles était de 2,3 mAh, ce qui représente 58% de la capacité pratique initiale de 4 mAh.

Les performances électrochimiques sont encore améliorées lorsque l'on augmente le nombre de couches poreuses de collecteurs de courant. Ainsi, avec une électrode négative conforme à l'invention **E-3** dans laquelle trois couches poreuses de collecteurs de courant sont utilisées, la surtension au 10^{ème} et au 20^{ème} cycles est faible (FIG.6.a.). Une très faible diminution de la capacité pratique est également observée (FIG.6.a.). En effet, la capacité pratique moyenne de cette électrode **E-3** pour les premiers 50 cycles était de 3,68 mAh, ce qui représente 92% de la capacité pratique initiale de 4 mAh.

Des analyses morphologiques effectuées par microscopie électronique à balayage des électrodes **E-A, E-1** et **E-2** après cyclage, ont permis de montrer que l'utilisation d'un réseau multiple de collecte de courant interne à l'électrode permet de favoriser la redistribution uniforme du zinc lors de sa formation au sein de l'électrode lors des cycles successifs.

### Exemple 2 : préparation d'une électrode E-B non conforme à l'invention

Une encre de matériau d'électrode comprenant 450 mg de zincate de calcium à titre de matière active, 21 mg d'oxyde de bismuth et 72 mg de nitrure de titane à titre d'additifs conducteurs, 33 mg d'alcool polyvinylique à titre de liant polymère et 1.90 ml d'eau ont été préparées.

Le zincate de calcium a été synthétisé par une méthode telle que décrite ci-dessus.

Un premier dépôt utilisant l'encre telle que préparée ci-dessus a ensuite été appliquée sur une première couche poreuse de collecteur de courant CC d'épaisseur 100 µm et constituée d'une grille circulaire de cuivre.

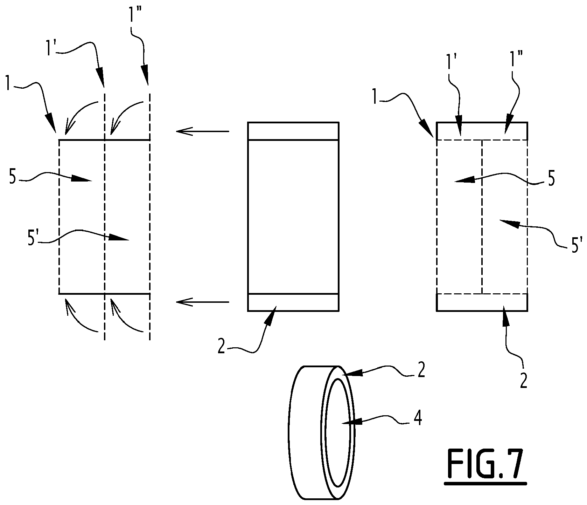

Un deuxième dépôt utilisant l'encre telle que préparée ci-dessus a été appliquée sur une deuxième couche poreuse de collecteur de courant CC d'épaisseur 100 µm et constituée d'une grille circulaire de cuivre de diamètre supérieur au dépôt. Les deux couches poreuses de collecteur de courant CC, chacune étant recouverte d'une encre de matériau d'électrode ont ensuite été séchées à 50°C environ dans un four puis assemblées de manière à mettre en contact la première couche de matériau d'électrode ME avec la deuxième couche de collecteur de courant CC. Une troisième couche poreuse de collecteur de courant CC, de diamètre supérieur à la deuxième couche de matériau d'électrode ME, a été appliquée sur la deuxième couche de matériau d'électrode ME,., pour former une électrode circulaire **E-B.** Suivant la figure 7 annexée, on note que les collecteurs de courant CC de diamètres supérieurs aux dépôts **1', 1"** sont rabattus sur le premier collecteur de courant CC **1,** de sorte que ces trois derniers soient en contact. L'électrode circulaire **3** obtenue **E-B** a alors été placée dans un anneau de PTFE **2** et pressée jusqu'à atteindre l'épaisseur de 0,5 mm environ. L'anneau de PTFE **2** protégeait les bords circulaires de l'électrode **3** laissant toujours une surface centrale **4** de contact avec électrolyte. Dans ce cas de figure, la couche poreuse de collecteur de courant CC est en contact direct avec l'électrolyte.

L'électrode circulaire **E-B** comprenait successivement une première couche poreuse de collecteur de courant CC **1,** une première couche **5** de matériau d'électrode ME, une deuxième couche poreuse de collecteur de courant CC **1'** reliée à la première couche poreuse de collecteur de courant CC 1, une deuxième couche de matériau d'électrode ME **5'** et une troisième couche poreuse de collecteur de courant CC **1"** reliée à la première couche poreuse de collecteur de courant CC **1.** La troisième couche poreuse de collecteur CC **1"** étant destinée à être en contact avec l'électrolyte et la première couche poreuse de collecteur de courant 1 étant destinée à assurer la connexion électrique de l'électrode **3** avec le circuit extérieur. L'électrode **3** était donc sous la forme d'un assemblage de couches successives ayant la structure suivante :
[CC-ME]₂-CC

Un accumulateurs alcalins zinc/nickel a ensuite été fabriqué en assemblant :
- l'électrode négative à base de zinc **E-B**,
- une électrode positive commerciale récupérée d'une pile commerciale au Ni-Zn de marque PKcell, comprenant une couche d'un matériau d'électrode comprenant du NiOOH et du Ni(OH)₂, déposée sur une couche poreuse de collecteur de courant constituée d'une mousse de nickel,
- un séparateur non tissé constitué d'une polyoléfine et une membrane de polypropylène interposés entre les électrodes négative et positive, le séparateur faisant face à l'électrode négative, et la membrane faisant face à l'électrode positive, et
- un électrolyte comprenant d'une solution aqueuse comprenant du KOH 7 M et 10 g/L de LiOH, ladite solution aqueuse étant saturée en ZnO.

L'électrode négative **3** ainsi obtenue E-B a ensuite été dans un accumulateur selon le même assemblage que celui représenté sur la figure 3.d. annexée.

Des tests de charge et décharge galvanostatiques (à courant constant) à C/3 (soit 3 h de charge et 3 h de décharge avec un courant de 1.3 mA) avec une tension de coupure de 1,93 V en charge et une tension de fin de décharge de 1.40 V ont ensuite été effectués avec une capacité pratique de 4 mAh qui correspond à 40% de la capacité théorique. Les tests ont été effectués avec un potentiostat-galvanostat vendu sous la dénomination commerciale OGF500 par la société Origalys, à température ambiante. Préalablement au cyclage à C/3, 3 cycles de charge à C/10 et de décharge à C/5 ont été effectués.

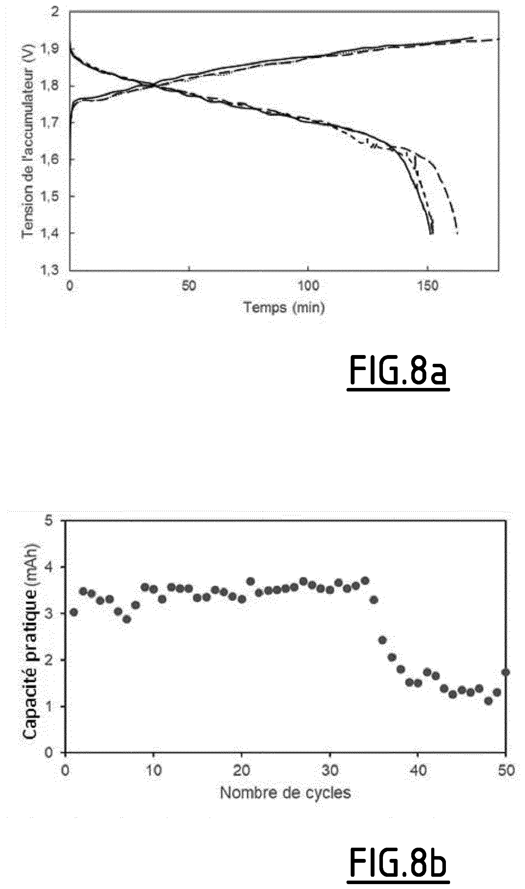

La FIG.8.a. montre les courbes de tension de l'accumulateur (en volts, V) en fonction du temps (en minutes, min) après 4 cycles (courbe avec les traits pleins), après 10 cycles (courbe avec les traits pointillés larges) et après 20 cycles (courbe avec les traits pointillés courts) lorsque l'accumulateur comprend l'électrode **E-B** à titre d'électrode négative. Les courbes de tension de l'accumulateur sur les 20 premiers cycles ne montrent pas de surtension, résultats similaires à l'électrode E-2 possédant le même nombre de couches poreuse de collecteur de courant CC.

La FIG.8.b. montre l'évolution de la capacité pratique de l'accumulateur (en milliampère heure, mAh) en fonction du nombre de cycles lorsque l'accumulateur comprend l'électrode **E-B** à titre d'électrode négative.

On peut observer lorsqu'une électrode négative non conforme à l'invention **E-B** est utilisée, une chute drastique de la capacité est observée à partir du 35^{ème} cycle.

La capacité pratique moyenne de cette électrode **E-A** pour les premiers 50 cycles était de 2,88 mAh, ce qui représente 72% de la capacité nominale initiale de 4 mAh.

Bien que les courbes de tension de l'accumulateur mesurées jusqu'au 20^{ème} cycle n'expliquent pas à elle seules les pertes de performances d'une électrode non conforme à l'invention **E-B,** les analyses morphologiques effectuées par microscopie électronique à balayage de l'électrode **E-B,** après cyclage, ont permis de montrer que l'utilisation d'un réseau multiple de collecte de courant interne permet de favoriser la redistribution uniforme du zinc lors de sa formation au sein de l'électrode lors des cycles successifs mais que la couche poreuse de collecte de courant CC externe, en contact direct avec l'électrolyte, est nuisible aux bonnes performances électrochimiques, conduisant à la formation d'une couche résistive d'hydroxyde de calcium en surface.

### Exemple 3 : préparation d'une électrode E-3 conforme à l'invention

Une encre de matériau d'électrode comprenant 300 mg de zincate de calcium à titre de matière active, 14 mg d'oxyde de bismuth et 48 mg de nitrure de titane à titre d'additifs conducteurs, 22 mg d'alcool polyvinylique à titre de liant polymère et 1.90 ml d'eau a été préparée.

Le zincate de calcium a été synthétisé par la méthode telle que décrite ci-dessus.

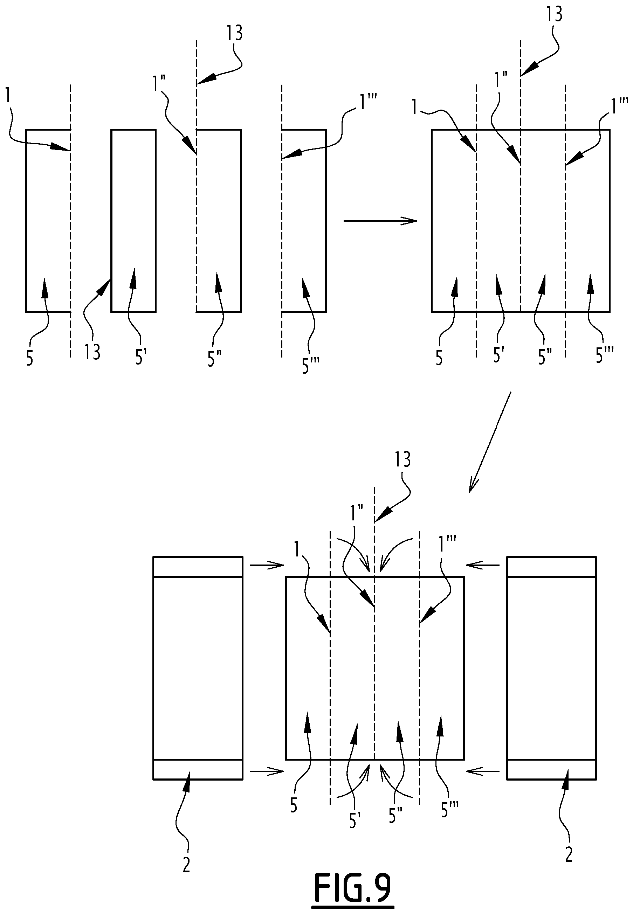

Suivant la figure 9 annexée, un premier dépôt **5** utilisant l'encre telle que préparée ci-dessus a ensuite été appliquée sur une première couche poreuse de collecteur de courant CC **1** d'épaisseur 100 µm et constituée d'une grille circulaire de cuivre de diamètre supérieur au dépôt.

Un deuxième dépôt **5'** utilisant l'encre telle que préparée ci-dessus a été appliquée sur une surface **13** non adhésive afin de l'utiliser sans couche poreuse de collecte de courant CC.

Un troisième dépôt **5"** utilisant l'encre telle que préparée ci-dessus a été appliquée sur une troisième couche poreuse de collecteur de courant CC **1"** d'épaisseur 100 µm et constituée d'une grille circulaire de cuivre comprenant une extension supérieure **13** telle qu'illustrée dans la FIG.9.

Un quatrième dépôt **5‴** utilisant l'encre telle que préparée ci-dessus a été appliquée sur un support non adhésif.

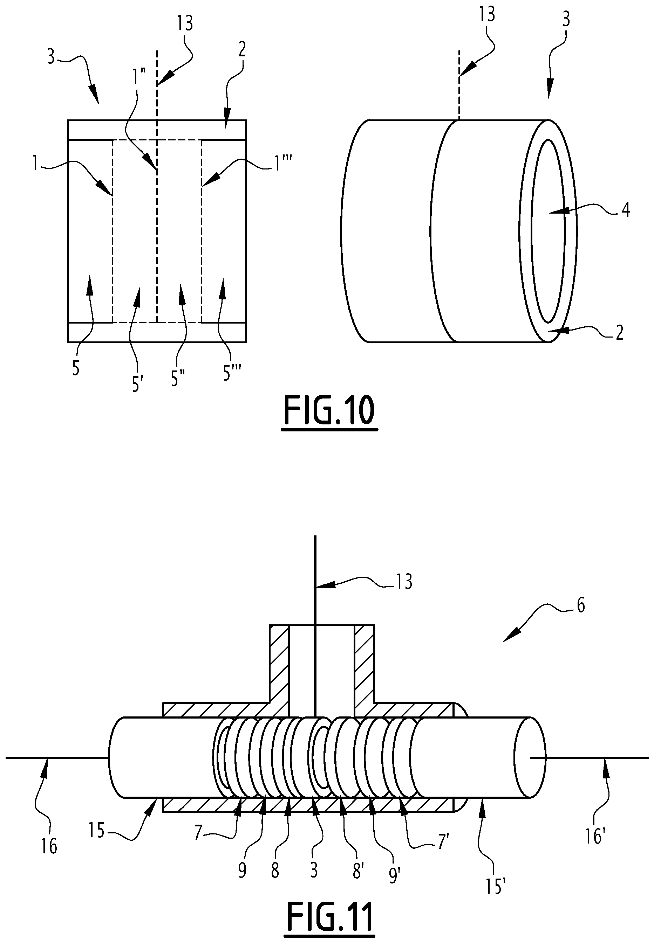

Les trois couches poreuses de collecteur de courant CC **1, 1" et 1‴,** chacune étant recouverte d'une encre de matériau d'électrode **5, 5" et 5‴,** ainsi que la surface **14** non adhésive recouverte d'une encre de matériau d'électrode **5'** ont ensuite été séchées à 50°C environ dans un four puis assemblées de manière à mettre en contact la première la couche poreuse de collecteur de courant CC **1** du premier dépôt **5** avec la couche **5'** de matériau d'électrode ME sans collecteur de courant, cette dernière en contact avec la couche poreuse de collecteur de courant CC **1"** du troisième dépôt, la couche **5"** de matériau d'électrode ME du troisième dépôt étant elle en contact avec la couche poreuse 1**‴** de collecte de courant du quatrième dépôt **5‴** pour former une électrode circulaire **3 E-3.** On note que les collecteurs de courant CC **1"**, **1‴** de diamètres supérieurs aux dépôts sont rabattus sur le premier collecteur de courant CC **1,** de sorte que ces trois derniers **1, 1" et 1‴** soient en contact. Tel que représenté sur la figure 10 annexée, l'électrode circulaire **3** obtenue **E-3** a alors été placée dans deux anneaux **2** de PTFE et pressée jusqu'à atteindre l'épaisseur de 800 µm. Les anneaux **2** de PTFE protégeaient les bords circulaires de l'électrode **3** laissant toujours deux surfaces centrales **4, 4'** de contact électrolyte - électrode.

Suivant la figure 10 annexée, l'électrode circulaire **3 E-3** comprenait successivement une première couche de matériau d'électrode ME **5,** une première couche poreuse de collecteur de courant CC **1** reliée à la deuxième couche poreuse de collecteur de courant CC **1"**, une deuxième couche de matériau d'électrode ME **5',** une deuxième couche poreuse de collecteur de courant CC **1"** munie d'une extension supérieure **13** destinée à assurer la connexion électrique de l'électrode **3** avec le circuit extérieur, une troisième couche de matériau d'électrode ME **5",** une troisième couche poreuse de collecteur de courant CC **1‴** reliée à la deuxième couche poreuse de collecteur de courant CC **1",** une quatrième couche de matériau d'électrode ME **5"'.** La première couche de matériau d'électrode ME **5** ainsi que la quatrième couche de matériau d'électrode ME **5‴** sont destinées à être en contact avec l'électrolyte. L'électrode **3** était donc sous la forme d'un assemblage de couches successives ayant la structure suivante :
ME-[CC-ME]₃

Un accumulateur alcalins **6** zinc/nickel a ensuite été fabriqué, suivant la FIG.11., en assemblant :
- l'électrode négative **3** à base de zinc **E-3,**
- deux électrodes positives **7,7'** à base de nickel récupérées à partir d'une pile au Ni-Zn commerciale de marque PKcell comprenant une couche d'un matériau d'électrode comprenant du NiOOH et du Ni(OH)₂, déposée sur une couche poreuse de collecteur de courant constituée d'une mousse de nickel,
- deux séparateurs **8,8'** non tissés constitués d'une polyoléfine et de deux membranes **9,9'** de polypropylène interposées entre les électrodes positive **7,7'** et l'électrode négative **3,** les séparateurs **8,8'** faisant face à l'électrode négative **3,** et les membranes **9,9'** faisant face aux électrodes positives **7,7',** et
- un électrolyte comprenant une solution aqueuse comprenant du KOH 7 M et 10 g/L de LiOH, ladite solution aqueuse étant saturée en ZnO.

La figure 11 montre l'accumulateur **6** tel que fabriqué ci-dessus comprenant une électrode négative **3** à base de zinc, deux électrodes positive **7,7'** à base de nickel, deux séparateurs non tissés **8,8'** constitués d'une polyoléfine et deux membranes **9,9'** de polypropylène interposées entre les électrodes négative **3** et positives **7,7',** les séparateurs **8,8'** faisant face à l'électrode négative **3,** et les membranes **9,9'** faisant face aux électrodes positive **7,7'.**

L'accumulateur comprend également, à ses deux extrémités, deux embouts **15,15'** en polychlorotrifluoroéthylene (Kel-F^{®}) munis de tiges **16, 16'** de carbone vitreux permettant le contact électrique direct avec les deux électrodes positives **7,7'** à base de nickel.

L'électrode négative 3 est reliée à la collecte de courant externe par l'extension **13** de son collecteur de courant.

Des tests de charge et décharge galvanostatiques (à courant constant) à C/3 (soit 3 h de charge et 3 h de décharge avec un courant de 1,3 mA) avec une tension de coupure de 1,93 V en charge et une tension de fin de décharge de 1,40 V ont ensuite été effectués avec une capacité pratique de 4 mAh qui correspond à 40% de la capacité théorique. Les tests ont été effectués avec un potentiostat-galvanostat vendu sous la dénomination commerciale OGF500 par la société Origalys, à température ambiante. Préalablement au cyclage à C/3, 3 cycles de charge à C/10 et de décharge à C/5 ont été effectués.

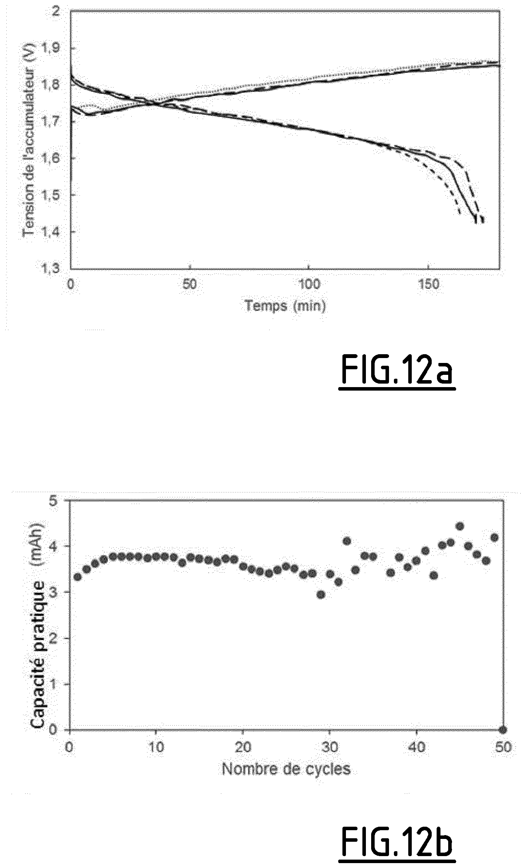

La FIG.12.a. montre des courbes de tension de l'accumulateur (en volts, V) en fonction du temps (en minutes, min) après 4 cycles (courbe avec les traits pleins), après 10 cycles (courbe avec les traits pointillés larges) et après 20 cycles (courbe avec les traits pointillés courts) lorsque l'accumulateur comprend l'électrode **E-3** à titre d'électrode négative.

La FIG.12.b. montre des courbes de l'évolution de la capacité pratique de l'accumulateur (en milliampère heure, mAh) en fonction du nombre de cycles lorsque l'accumulateur comprend l'électrode **E-3** à titre d'électrode négative.

On peut observer que lorsqu'une électrode négative conforme à l'invention **E-3** est utilisée, les courbes de tension de l'accumulateur ne révèlent aucune surtension sur les 4^{ème}, 10^{ème} et 20^{ème} cycles.

On peut observer que lorsqu'une électrode négative conforme à l'invention **E-3** est utilisée, la capacité pratique est maintenue constante sur les 50 cycles effectués.

La capacité pratique moyenne de cette électrode **E-3** pour les premiers 50 cycles était de 3,70 mAh, ce qui représente 93% de la capacité pratique initiale de 4 mAh.

Des analyses morphologiques effectuées par microscopie électronique à balayage de l'électrode **E-3,** après cyclage, ont permis de montrer que l'utilisation d'un réseau multiple de collecte de courant interne permet de favoriser la redistribution uniforme du zinc lors de sa formation au sein de l'électrode lors des cycles successifs.

## Revendications

1. Électrode pour un dispositif de stockage de l'énergie rechargeable, comprenant deux couches externes et plusieurs couches internes interposées entre les deux couches externes, lesdites couches internes et externes comprenant plusieurs couches de matériau d'électrode ME et plusieurs couches poreuses de collecteur de courant CC, lesdites couches de matériau d'électrode ME et de collecteur de courant CC étant alternées selon le motif de répétition -[CC-ME]- et au moins l'une des deux couches externes de l'électrode est une couche de matériau d'électrode ME, **caractérisée en ce que** ladite électrode est une électrode négative.

2. Électrode selon la revendication 1, **caractérisée en ce qu'**elle a une épaisseur variant de 50 µm à 4 mm.

3. Électrode selon la revendication 1 ou 2, **caractérisée en ce qu'**au moins une partie ou chacune des couches poreuses de collecteur de courant CC est sous la forme d'une grille, d'une feuille perforée, d'un feutre, d'un maillage, d'un tissu, ou d'une mousse.

4. Électrode selon l'une quelconque des revendications précédentes, **caractérisée en ce que** les couches poreuses de collecteur de courant CC, identiques ou différentes, sont des couches de matériau conducteur.

5. Electrode selon l'une quelconque des revendications précédentes, **caractérisé en ce que** ladite électrode comprend une couche externe qui est une couche de matériau d'électrode ME et une couche externe qui est une couche poreuse de collecteur de courant CC et **en ce que** ladite électrode est sous la forme d'un assemblage de couches successives ayant la structure suivante :
[CC-ME]ₙ
dans laquelle ME est une couche de matériau d'électrode, CC est une couche poreuse de collecteur de courant et 2 ≤ n ≤ 8.

6. Électrode selon l'une quelconque des revendications 1 à 4, **caractérisée en ce que** l'autre couche externe de l'électrode est une couche de matériau d'électrode ME et ladite électrode est sous la forme d'un assemblage de couches successives ayant la structure suivante :
ME-[CC-ME]ₚ₋₁
dans laquelle ME est une couche de matériau d'électrode, CC est une couche poreuse de collecteur de courant et 2 ≤ p ≤ 8.

7. Électrode selon l'une quelconque des revendications précédentes, **caractérisée en ce que** chacune des couches de matériau d'électrode ME comprend au moins une matière active d'électrode, un liant polymère et éventuellement un agent conférant une conductivité électronique.

8. Électrode selon l'une quelconque des revendications précédentes, **caractérisée en ce qu'**elle est une électrode négative à base de zinc.

9. Électrode selon l'une quelconque des revendications précédentes, **caractérisée en ce que** l'électrode est destinée à être agencée dans un dispositif rechargeable de stockage de l'énergie comprenant l'électrode, une contre-électrode et un électrolyte, la couche externe de matériau d'électrode ME étant destinée à faire face à une couche externe de la contre-électrode et destinée à être en contact direct avec l'électrolyte.

10. Dispositif rechargeable de stockage de l'énergie comprenant :
- au moins une électrode positive,
- au moins une électrode négative,
- un électrolyte,
ledit dispositif étant **caractérisé en ce que** ladite électrode négative est une électrode telle que définie à l'une quelconque des revendications 1 à 9, et **en ce que** ledit électrolyte n'est pas en contact direct avec les couches poreuses de collecteur de courant CC de ladite électrode négative.

11. Dispositif selon la revendication 10, **caractérisé en ce que** l'électrolyte est en contact direct avec l'électrode telle que définie à l'une quelconque des revendications 1 à 9, par l'intermédiaire de la couche externe qui est une couche de matériau d'électrode ME de ladite électrode négative.

12. Dispositif selon la revendication 10 ou 11, **caractérisé en ce qu'**il est choisi parmi un accumulateur alcalin, une batterie lithium-ion, une batterie au plomb, une batterie nickel-hydrure métallique et un supercondensateur.

13. Dispositif selon l'une quelconque des revendications 10 à 12, **caractérisé en ce qu'**il est un accumulateur alcalin choisi parmi une batterie zinc/air et une batterie zinc/nickel.

14. Utilisation d'une électrode telle que définie à l'une quelconque des revendications 1 à 9, pour améliorer la densité d'énergie d'un dispositif rechargeable de stockage de l'énergie.

15. Utilisation d'une électrode telle que définie à l'une quelconque des revendications 1 à 9, dans un accumulateur alcalin.

## Patentansprüche

1. Elektrode für eine wiederaufladbare Energiespeichervorrichtung, umfassend zwei äußere Schichten und mehrere innere Schichten, die zwischen den beiden äußeren Schichten angeordnet sind, wobei die inneren und äußeren Schichten mehrere Elektrodenwerkstoffschichten ME und mehrere poröse Stromkollektorschichten CC umfassen, wobei die Elektrodenwerkstoffschichten ME und Stromkollektorschichten CC nach dem Wiederholungsmuster -[CC-ME]- abwechseln und mindestens eine der beiden äußeren Schichten der Elektrode eine Elektrodenwerkstoffschicht ME ist, **dadurch gekennzeichnet, dass** die Elektrode eine negative Elektrode ist.

2. Elektrode nach Anspruch 1, **dadurch gekennzeichnet, dass** sie eine Dicke hat, die von 50 µm bis 4 mm variiert.

3. Elektrode nach Anspruch 1 oder 2, **dadurch gekennzeichnet, dass** mindestens ein Teil oder jede der porösen Stromkollektorschichten CC in Form eines Gitters, einer perforierten Folie, eines Filzes, eines Geflechts, eines Gewebes oder eines Schaums vorliegt.

4. Elektrode nach einem der vorhergehenden Ansprüche, **dadurch gekennzeichnet, dass** die identischen oder unterschiedlichen porösen Stromkollektorschichten CC Schichten aus leitfähigem Werkstoff sind.

5. Elektrode nach einem der vorhergehenden Ansprüche, **dadurch gekennzeichnet, dass** die Elektrode eine äußere Schicht umfasst, die eine Elektrodenwerkstoffschicht ME ist, und eine äußere Schicht, die eine poröse Stromkollektorschicht CC ist, und dass die Elektrode in Form einer Anordnung aus aufeinanderfolgenden Schichten mit dem folgenden Aufbau vorliegt:
[CC-ME]ₙ
worin ME eine Elektrodenwerkstoffschicht, CC eine poröse Stromkollektorschicht und 2 ≤ n ≤ 8 ist.

6. Elektrode nach einem der Ansprüche 1 bis 4, **dadurch gekennzeichnet, dass** die andere äußere Schicht der Elektrode eine Elektrodenwerkstoffschicht ME ist und die Elektrode in Form einer Anordnung aus aufeinanderfolgenden Schichten mit dem folgenden Aufbau vorliegt:
ME- [CC-ME]ₚ₋₁
worin ME eine Elektrodenwerkstoffschicht, CC eine poröse Stromkollektorschicht und 2 ≤ p ≤ 8 ist.

7. Elektrode nach einem der vorhergehenden Ansprüche, **dadurch gekennzeichnet, dass** jede der Elektrodenwerkstoffschichten ME mindestens ein aktives Elektrodenmaterial, ein Polymerbindemittel und gegebenenfalls ein eine elektronische Leitfähigkeit verleihendes Mittel umfasst.

8. Elektrode nach einem der vorhergehenden Ansprüche, **dadurch gekennzeichnet, dass** sie eine negative Elektrode auf Zinkbasis ist.

9. Elektrode nach einem der vorhergehenden Ansprüche, **dadurch gekennzeichnet, dass** die Elektrode dazu bestimmt ist, in einer wiederaufladbaren Energiespeichervorrichtung angeordnet zu werden, welche die Elektrode, eine Gegenelektrode und einen Elektrolyten umfasst, wobei die äußere Elektrodenwerkstoffschicht ME dazu bestimmt ist, einer äußeren Schicht der Gegenelektrode gegenüberzuliegen, und dazu bestimmt ist, in direktem Kontakt mit dem Elektrolyten zu sein.

10. Wiederaufladbare Energiespeichervorrichtung, umfassend:
- mindestens eine positive Elektrode,
- mindestens eine negative Elektrode,
- einen Elektrolyten,
wobei die Vorrichtung **dadurch gekennzeichnet ist, dass** die negative Elektrode eine wie in einem der Ansprüche 1 bis 9 definierte Elektrode ist und dass der Elektrolyt nicht in direktem Kontakt mit den porösen Stromkollektorschichten CC der negativen Elektrode ist.

11. Vorrichtung nach Anspruch 10, **dadurch gekennzeichnet, dass** der Elektrolyt mit der wie in einem der Ansprüche 1 bis 9 definierten Elektrode über die äußere Schicht, die eine Elektrodenwerkstoffschicht ME der negativen Elektrode ist, in direktem Kontakt ist.

12. Vorrichtung nach Anspruch 10 oder 11, **dadurch gekennzeichnet, dass** sie unter einem alkalischen Akkumulator, einer Lithium-Ionen-Batterie, einer Bleibatterie, einer Nickel-Metallhydrid-Batterie und einem Superkondensator gewählt ist.

13. Vorrichtung nach einem der Ansprüche 10 bis 12, **dadurch gekennzeichnet, dass** sie ein alkalischer Akkumulator ist, der unter einer Zink-Luft-Batterie und einer Zink-Nickel-Batterie gewählt ist.

14. Verwendung einer wie in einem der Ansprüche 1 bis 9 definierten Elektrode zur Verbesserung der Energiedichte einer wiederaufladbaren Energiespeichervorrichtung.

15. Verwendung einer wie in einem der Ansprüche 1 bis 9 definierten Elektrode in einem alkalischen Akkumulator.

## Claims

1. An electrode for a rechargeable energy storage device, comprising two external layers and several internal layers interposed between the two external layers, said internal and external layers comprising several electrode material layers ME and several porous current collector layers CC, said electrode material ME and current collector CC layers being alternated according to the repetition pattern - [CC - ME] - and at least one of the two external layers of the electrode is an electrode material layer ME, **characterized in that** said electrode is a negative electrode.

2. The electrode according to claim 1, **characterized in that** it has a thickness varying from 50 µm to 4 mm.

3. The electrode according to claim 1 or 2, **characterized in that** at least a part or each of the porous current collector layers CC is in the form of a grid, a perforated sheet, a felt, a meshing, a fabric or a foam.

4. The electrode according to any one of the preceding claims, **characterized in that** the porous current collector layers CC, identical or different, are conductive material layers.

5. The electrode according to any one of the preceding claims, **characterized in that** said electrode comprises an external layer that is an electrode material layer ME and an external layer that is a porous current collector layer CC and **in that** said electrode is in the form of an assembly of successive layers having the following structure:
[CC - ME]ₙ
wherein ME is an electrode material layer, CC is a porous current collector layer, and 2 ≤ n ≤ 8.

6. The electrode according to any one of claims 1 to 4, **characterized in that** the other external layer of the electrode is an electrode material layer ME and said electrode is in the form of an assembly of successive layers having the following structure:
ME - [CC - ME]ₚ₋₁
wherein ME is an electrode material layer, CC is a porous current collector layer, and 2 ≤ p ≤ 8.

7. The electrode according to any one of the preceding claims, **characterized in that** each of the electrode material layers ME comprises at least one electrode active material, a polymer binder and optionally an electronic conductivity agent.

8. The electrode according to any one of the preceding claims, **characterized in that** it is a zinc-based negative electrode.

9. The electrode according to any one of the preceding claims, **characterized in that** the electrode is intended to be arranged into a rechargeable energy storage device comprising the electrode, a counter-electrode and an electrolyte, the external electrode material layer ME being intended to face an external layer of the counter-layer and intended to be in direct contact with the electrolyte.

10. A rechargeable energy storage device comprising:
- at least one positive electrode,
- at least one negative electrode,
- an electrolyte,
said device being **characterized in that** said negative electrode is an electrode as defined in any one of claims 1 to 9, and **in that** said electrolyte is not in direct contact with the porous current collector layers CC of said negative electrode.

11. The device according to claim 10, **characterized in that** the electrolyte is in direct contact with the electrode as defined in any one of claims 1 to 9, through the external layer that is an electrode material layer ME of said negative electrode.

12. The device according to claim 10 or 11, **characterized in that** it is chosen among an alkaline accumulator, a lithium-ion battery, a lead battery, a nickel-metal hydride battery and a supercapacitor.

13. The device according to any one of claims 10 to 12, **characterized in that** it is an alkaline accumulator chosen among a zinc/air battery and a zinc/nickel battery.

14. The use of an electrode as defined in any one of claims 1 to 9, to improve the energy density of a rechargeable energy storage device.

15. The use of an electrode as defined in any one of claims 1 to 9, in an alkaline accumulator.
